# EUROPEAN PATENT SPECIFICATION

(11) **EP 3 955 583 B1**
(45) Date of publication and mention of the grant of the patent: **24.06.2026**
(21) Application number: 20805530.1
(22) Date of filing: 09.05.2020
(51) Int. Cl.: H04N 21/4363, H04N 21/442, H04N 21/454, H04N 21/475, H04N 21/43, H04N 21/436, H04N 21/45

(54) **METHOD FOR PERFORMING PLAYBACK OF AUDIO AND VIDEO DATA, TERMINAL, AND DEVICE**
VERFAHREN ZUR WIEDERGABE VON AUDIO- UND VIDEODATEN, ENDGERÄT UND VORRICHTUNG
PROCÉDÉ POUR LA RÉALISATION DE LECTURE DE DONNÉES AUDIO ET VIDÉO, TERMINAL ET DISPOSITIF

(30) Priority: 10.05.2019 CN 201910387481
(43) Date of publication of application: 16.02.2022
(73) Proprietor: Huawei Technologies Co., Ltd., Shenzhen, Guangdong 518129 (CN)
(72) Inventor: ZHANG, Wei, Shenzhen, Guangdong 518129 (CN)
(74) Representative: Isarpatent
(86) International application number: PCT/CN2020/089453
(87) International publication number: WO 2020/228645

(56) References cited:
- WO-A1-2013/087407
- CN-A- 105 577 947
- CN-A- 105 979 355
- CN-A- 106 792 075
- CN-A- 106 998 495
- CN-A- 107 371 058
- CN-A- 110 166 820
- US-A1- 2007 294 553
- US-A1- 2015 358 666
- US-A1- 2017 094 352
- US-A1- 2018 139 071
- US-A1- 2018 288 470
- US-A1- 2018 335 903
- US-A1- 2019 020 375
- US-B1- 8 250 228

## Description

### TECHNICAL FIELD

This application relates to the field of computer technologies, and in particular, to an audio and video playing method, and a terminal.

### BACKGROUND

Currently, many electronic devices (for example, devices such as a mobile phone, a television, and a computer) can play videos.

In an actual application process, to protect vision of a child, duration of watching a video by the child needs to be limited. Currently, when the duration of watching a video by the child reaches preset watching duration, the electronic device may automatically pause playing of the video based on a video play video, or a parent may directly pause playing of the video on the electronic device. However, in actual life, after the electronic device pauses playing of the video, the child is prone to discomfort, for example, the child has a bad emotion or cries. In other words, flexibility of playing audio and video is low.

US 2018/288470 A1 discloses systems and methods for tracking streaming of media content on a second computing device, detecting termination of the streaming of media content on the second computing device, determining when the streaming of the media content was terminated on the second computing device, and automatically resuming streaming of the media content on a first computing device, at a point where the streaming of the media content was terminated on the second computing device.

### SUMMARY

This application provides an audio and video playing method, and a terminal, as defined in the appended set of claims, to improve flexibility of playing audio and video.

According to a first aspect, an embodiment of this application provides an audio and video playing method. A first terminal device presents a first interface including a play interface for a first video. After the first terminal device obtains a first instruction, the first terminal device responds to the first instruction to stop playing the first video in the first interface and send first information to a second terminal device. The first information is used to enable the second terminal device to play first audio data, the first information is the first audio data, the first audio data is audio data of the first video after a first play moment, and the first play moment is a play moment at which the first terminal device stops playing the first video. The first terminal device obtains the first instruction by using at least one of the following three implementations: a. the first terminal device receives the first instruction entered by a user into the first terminal device, b.the first terminal device detects whether a preset condition is met, and generates the first instruction when the first terminal device detects that the preset condition is met, and c. the first terminal device receives a control instruction that is sent by a control device and that is used to instruct to pause playing of a video, and generates the first instruction based on the control instruction.

In the foregoing process, in a process in which the first terminal device plays the first video in the first interface, after the first terminal device obtains the first instruction, the first terminal device responds to the first instruction to stop playing the first video in the first interface and send the first information to the second terminal device, so that the second terminal device continues to play audio of the first video. Therefore, flexibility of playing audio and video is improved.

In a possible implementation, when the first terminal device determines that a preset function is in an enabled state, the first terminal device responds to the first instruction to stop playing the first video in the first interface and send the first information to the second terminal device, where the preset function is used to indicate to play audio of a video via another device when playing of the video is paused.

In the foregoing process, the preset function is set on the first terminal device, and a status (an enabled state or a disabled state) of the preset function may be set based on an actual requirement. Only when the preset function is in the enabled state, the first terminal device responds to the first instruction to stop playing the first video on the first interface and send the first information to the second terminal device, so that flexibility of playing audio and video is improved.

In a possible implementation, before the first terminal device responds to the first instruction, the first terminal device receives the first instruction entered by a user into the first terminal device. The user may enter the first instruction into the first terminal device based on an actual requirement, so that flexibility of playing audio and video is relatively high.

In a possible implementation, before the first terminal device responds to the first instruction, the first terminal device generates the first instruction when detecting that video play duration is greater than preset duration. In this feasible implementation, the first terminal device may automatically generate the first instruction based on a preset condition, to implement more accurate control on video playing.

In a possible implementation, the first terminal device locks a screen after the first terminal device stops playing the first video in the first interface. In this way, a child can be prevented from continuing to use the terminal device, and vision of the child can be protected.

In a possible implementation, after the first terminal device stops playing the first video in the first interface, the first terminal device displays a preset image corresponding to the first video. In this way, a bad emotion of a child can be relieved.

In a possible implementation, that the first terminal device sends first information to a second terminal device includes: The first terminal device establishes a network connection to the second terminal device; and the first terminal device sends the first information to the second terminal device through the network connection.

In a possible implementation, the first terminal device obtains address information of the second terminal device from configuration information, and establishes the network connection to the second terminal device based on the address information of the second terminal device, where the configuration information is preconfigured on the first terminal device. In this way, the first terminal device can quickly establish a connection to the second terminal device.

In a possible implementation, the first terminal device searches a network in which the first terminal device is located for an audio device, to obtain address information of the second terminal device, and establishes the network connection to the second terminal device based on the address information of the second terminal device, where the audio device is a device with an audio playing function. This can ensure that the determined second terminal device is reachable.

In a possible implementation, that the first terminal device sends first information to a second terminal device includes: The first terminal device establishes a Bluetooth connection to the second terminal device; and the first terminal device sends the first information to the second terminal device through the Bluetooth connection.

In a possible implementation, the second terminal device is a terminal device that can receive audio data sent by the first terminal device and play the audio data.

According to a second aspect, an embodiment of this application provides a terminal device, including a processor, a display, a transmitter, and a memory. The processor executes program instructions in the memory.

The display is configured to present a first interface, where the first interface includes a play interface for a first video.

The processor is configured to respond to a first instruction to stop playing the first video in the first interface.

The transmitter is configured to send first information to a second terminal device.

The first information is used to enable the second terminal device to play first audio data, the first information is the first audio data, the first audio data is audio data of the first video after a first play moment, and the first play moment is a play moment at which the first terminal device stops playing the first video. The terminal device is configured to obtain the first instruction by using at least one of the following three implementations: a. the terminal device receives the first instruction entered by a user into the terminal device, b. the terminal device detects whether a preset condition is met, and generates the first instruction when the terminal device detects that the preset condition is met, and c. the terminal device receives a control instruction that is sent by a control device and that is used to instruct to pause playing of a video, and generates the first instruction based on the control instruction.

In a possible implementation, the processor is specifically configured to: when determining that a preset function is in an enabled state, respond to the first instruction to stop playing the first video in the first interface, where the preset function is used to indicate to play audio of a video via another device when playing of the video is paused.

In a possible implementation, before the processor responds to the first instruction, the processor is further configured to:
receive the first instruction entered by a user into the first terminal device; or
generate the first instruction when detecting that video play duration is greater than preset duration.

In a possible implementation, the processor is further configured to lock a screen after the processor stops playing the first video in the first interface; or
the display is further configured to display a preset image corresponding to the first video after the processor stops playing the first video in the first interface.

In a possible implementation, the processor is further configured to establish a network connection to the second terminal device; and
the transmitter is specifically configured to send the first information to the second terminal device through the network connection.

In a possible implementation, the processor is specifically configured to:
obtain address information of the second terminal device from configuration information, and establish the network connection to the second terminal device based on the address information of the second terminal device, where the configuration information is preconfigured on the first terminal device; or
search a network in which the first terminal device is located for an audio device, to obtain address information of the second terminal device, and establish the network connection to the second terminal device based on the address information of the second terminal device, where the audio device is a device with an audio playing function.

In a possible implementation, the processor is further configured to establish a Bluetooth connection to the second terminal device; and
the transmitter is specifically configured to send the first information to the second terminal device through the Bluetooth connection.

In a possible implementation, the second terminal device is a terminal device that can receive audio data sent by the first terminal device and play the audio data.

According to the audio and video playing method, and the terminal provided in the embodiments of this application, in the process in which the first terminal device plays the first video in the first interface, after the first terminal device obtains the first instruction, the first terminal device responds to the first instruction to stop playing the first video in the first interface and send the first information to the second terminal device, so that the second terminal device continues to play audio of the first video. Therefore, flexibility of playing audio and video is improved.

### BRIEF DESCRIPTION OF DRAWINGS

FIG. 1A is a diagram of a system architecture according to an embodiment of this application;
FIG. 1B is a schematic diagram of a structure of an electronic device according to an embodiment of this application;
FIG. 2 is a schematic flowchart of a video processing method according to an embodiment of this application;
FIG. 3 is a schematic diagram of a device interface according to an embodiment of this application;
FIG. 4 is a schematic diagram of a device architecture according to an embodiment of this application;
FIG. 5 is a schematic diagram of another device architecture according to an embodiment of this application;
FIG. 6 is a schematic flowchart of another video processing method according to an embodiment of this application;
FIG. 7 is a schematic diagram of another device interface according to an embodiment of this application;
FIG. 8 is a schematic diagram of still another device interface according to an embodiment of this application;
FIG. 9 is a schematic diagram of yet another device interface according to an embodiment of this application;
FIG. 10 is a schematic diagram of a video processing process according to an embodiment of this application;
FIG. 11 is a schematic diagram of another video processing process not being part of the present invention;
FIG. 12 is a schematic diagram of still another video processing process according to an embodiment of this application;
FIG. 13 is a schematic flowchart of still another video processing method according to an embodiment of this application;
FIG. 14 is a schematic diagram of yet another video processing process not being part of the present invention;
FIG. 15 is a schematic diagram of a structure of an audio and video playing apparatus according to an embodiment of this application; and
FIG. 16 is a schematic diagram of a structure of a terminal device according to an embodiment of this application.

### DESCRIPTION OF EMBODIMENTS

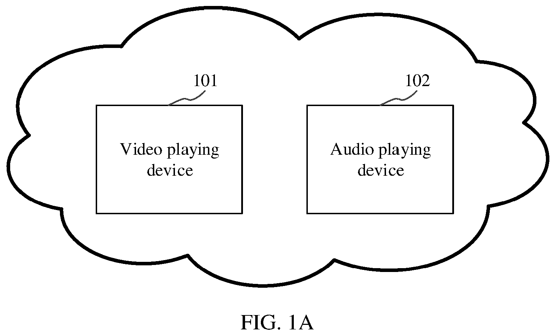

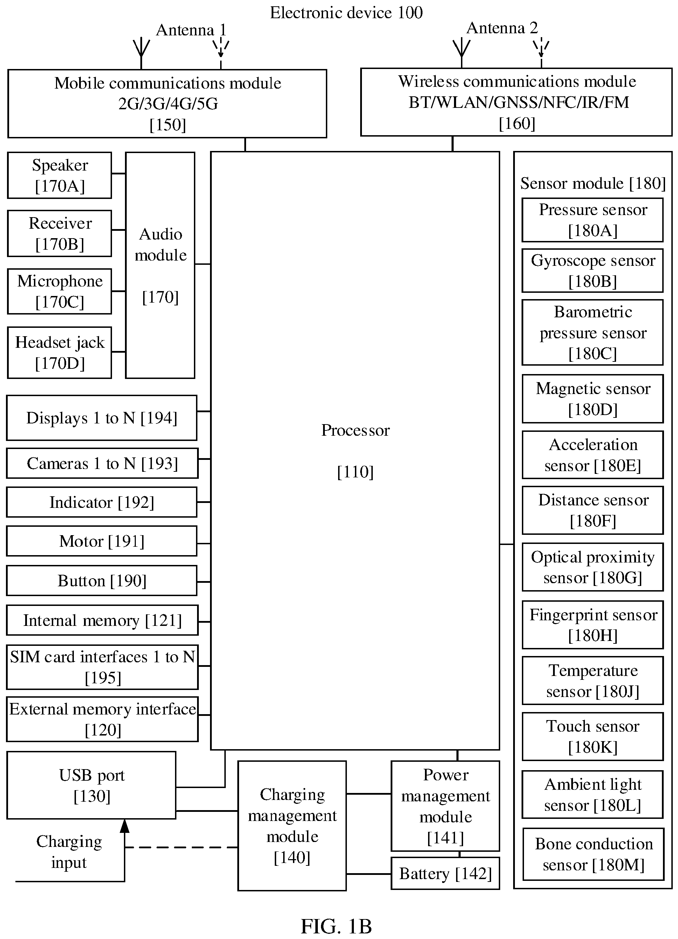

For ease of understanding of this application, a system architecture and a device applied to this application are first described with reference to FIG. 1A and FIG. 1B.

FIG. 1A is a diagram of a system architecture according to an embodiment of this application. As shown in FIG. 1A, a video device and an audio device are included. The video device and the audio device are usually located in a same scene. For example, the video device and the audio device are located in a same home, the video device and the audio device are located in a same office, or the video device and the audio device are located in a same venue. The video device is a device with a video playing function. For example, the video device may include a device such as a mobile phone, a computer, or a television. The audio device is a device with an audio playing function. For example, the audio device may include a device such as a sound box, a mobile phone, a computer, or a television. The video device and the audio device may communicate with each other. For example, the video device and the audio device may communicate with each other through a network, or may communicate with each other through Bluetooth.

In this application, both the video device and the audio device are electronic devices. The following describes a structure of the electronic device with reference to FIG. 1B.

FIG. 1B is a schematic diagram of a structure of an electronic device according to an embodiment of this application. As shown in FIG. 1B, the electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to control instruction reading and instruction execution.

A memory may be further disposed in the processor 110, and is configured to store instructions and data. In some embodiments, the memory in the processor 110 is a cache memory. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through an I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through an I2S bus, to implement communication between the processor 110 and the audio module 170. In some embodiments, the audio module 170 may transfer an audio signal to the wireless communications module 160 through the I2S interface, to implement a function of answering a call by using a Bluetooth headset.

The PCM interface may also be configured to: perform audio communication, and sample, quantize, and code an analog signal. In some embodiments, the audio module 170 may be coupled to the wireless communications module 160 through a PCM bus interface. In some embodiments, the audio module 170 may transfer an audio signal to the wireless communications module 160 through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communications bus. The bus converts to-be-transmitted data between serial communication and parallel communication. In some embodiments, the UART interface is usually configured to connect the processor 110 to the wireless communications module 160. For example, the processor 110 communicates with a Bluetooth module in the wireless communications module 160 through the UART interface, to implement a Bluetooth function. In some embodiments, the audio module 170 may transfer an audio signal to the wireless communications module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

It may be understood that an interface connection relationship between the modules illustrated in this embodiment of this application is merely used as an example for description, and does not constitute a limitation on the structure of the electronic device 100. In some other embodiments of this application, the electronic device 100 may alternatively use an interface connection manner different from an interface connection manner in this embodiment, or use a combination of a plurality of interface connection manners.

The mobile communications module 150 may provide a wireless communication solution that includes 2G, 3G, 4G, 5G, or the like and that is applied to the electronic device 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit a processed electromagnetic wave to the modem processor for demodulation. The mobile communications module 150 may further amplify a signal modulated by the modem processor, and convert the signal into an electromagnetic wave for radiation through the antenna 1. In some embodiments, at least some functional modules of the mobile communications module 150 may be disposed in the processor 110. In some embodiments, at least some functional modules of the mobile communications module 150 may be disposed in a same device as at least some modules of the processor 110.

The modem processor may include a modulator and a demodulator. The modulator is configured to modulate a to-be-sent low-frequency baseband signal into a medium-frequency or high-frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to the application processor. The application processor outputs a sound signal by using an audio device (not limited to the speaker 170A, the receiver 170B, or the like), or displays an image or a video on the display 194. In some embodiments, the modem processor may be an independent device. In some other embodiments, the modem processor may be independent of the processor 110, and is disposed in a same device as the mobile communications module 150 or another functional module.

The wireless communications module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like and that is applied to the electronic device 100. The wireless communications module 160 may be one or more components integrating at least one communications processing module. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 is coupled to the mobile communications module 150, and the antenna 2 is coupled to the wireless communications module 160, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation systems, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may use a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, quantum-dot light-emitting diodes (quantum-dot light-emitting diodes, QLED), or the like. In some embodiments, the electronic device 100 may include one or N displays 194, where N is a positive integer greater than 1.

The electronic device 100 may implement the photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The digital signal processor is configured to process a digital signal, and may process another digital signal in addition to the digital image signal. For example, when the electronic device 100 selects a frequency, the digital signal processor is configured to perform Fourier transform and the like on frequency energy.

The video codec is configured to: compress or decompress a digital video. The electronic device 100 may support one or more video codecs. Therefore, the electronic device 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, with reference to a transfer mode between human brain neurons, and may further continuously perform self-learning. The NPU can implement applications such as intelligent cognition of the electronic device 100, such as image recognition, facial recognition, speech recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (such as audio data and a phone book) and the like that are created during use of the electronic device 100. In addition, the internal memory 121 may include a high-speed random access memory, or may include a nonvolatile memory such as at least one magnetic disk storage device, a flash memory, or a universal flash storage (universal flash storage, UFS). The processor 110 runs the instructions stored in the internal memory 121 and/or the instructions stored in the memory disposed in the processor, to perform various function applications and data processing of the electronic device 100.

The electronic device 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

In this application, in a video playing process of the video device, after the video device obtains an instruction used to instruct the video device to pause playing of a video, the video device may pause playing of the video, lock a screen, and request the audio device to continue to play audio of the video. Therefore, flexibility of playing audio and video is improved.

The following describes in detail the technical solutions of this application by using specific embodiments. It should be noted that the following specific embodiments may exist independently or may be combined with each other, and same or similar content is not repeatedly described in different embodiments.

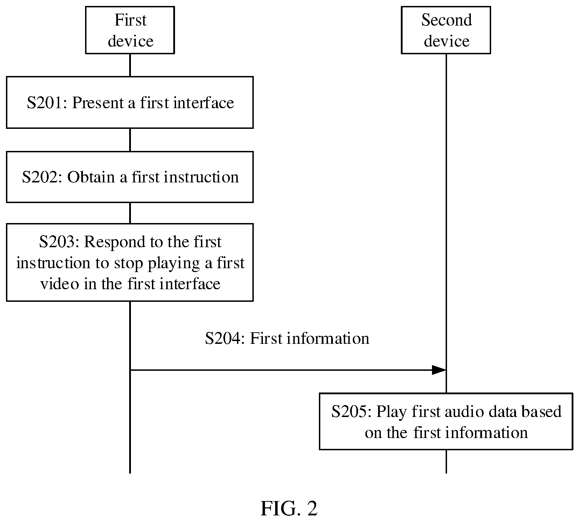

FIG. 2 is a schematic flowchart of a video processing method according to an embodiment of this application. As shown in FIG. 2, the method may include the following steps.

S201: A first terminal device presents a first interface.

The first interface includes a play interface for a first video. In other words, the first terminal device plays the first video in the first interface.

Optionally, when the first video is played in full screen, the first interface may be the play interface for the first video. When the first video is not played in full screen (for example, is played in a small window), the play interface for the first video is a part of the first interface.

The first terminal device is a terminal device with a video playing function. For example, the first terminal device may be a device such as a mobile phone, a computer, or a television.

The first video is buffered in the first terminal device in a form of audio and video data, and is played by the first terminal device. The audio and video data is data including video data and audio data. The video data is data representing an image of the first video, and the audio data is data representing a sound of the first video.

S202: The first terminal device obtains a first instruction.

The first instruction is used to instruct the first terminal device to pause playing of the first video and instruct another device to play first audio data of the first video. The another device is a device with an audio playing function other than the first device. The first audio data is audio data of the first video after a first play moment, and the first play moment is a play moment at which the first terminal device stops playing the first video.

For example, in a process in which the first terminal device plays the first video in the first interface, assuming that the first terminal device obtains the first instruction when the first video is played to the twelfth minute, the first play moment is the twelfth minute, and correspondingly, the first audio data is audio data of the first video after the twelfth minute.

The first terminal device obtains the first instruction by using at least the following three feasible implementations:
In a feasible implementation, the first terminal device receives the first instruction entered by a user into the first terminal device.

For example, a display of the first terminal device may be a touchscreen, and the play interface for the first video includes an icon for pausing play of a video. The user may perform a tap operation on the icon for pausing play of a video, so that the first terminal device receives the first instruction entered by the user.

For example, a video pause key (physical key) may be disposed in the first terminal device, and the user may perform a pressing operation on the video pause key, so that the first terminal device receives the first instruction entered by the user.

For example, an image collection apparatus (for example, a camera) is disposed in the first terminal device, and the image collection apparatus may collect an image. The user may preset a preset image on the first terminal device. The first terminal device may perform recognition processing on the image obtained by the image collection apparatus, and the first terminal device generates the first instruction when determining that the image obtained by the image collection apparatus matches the preset image. For example, the preset image may be an image that includes a preset gesture (for example, an "S"-shaped gesture or an "OK" gesture) or an image that includes a preset emoticon (for example, pleasure or sadness). Optionally, to reduce a misoperation, the first terminal device generates the first instruction when all of a plurality of images consecutively collected by the image collection apparatus match the preset image. Correspondingly, in a video playing process of the first terminal device, the user may present, in front of the image collection apparatus, a gesture, an emoticon, or the like that matches the preset image, to enter the first instruction. The user can enter the first instruction by presenting a preset gesture, a preset emoticon, or the like in front of a photographing apparatus, so that an operation of the user is simple and convenient, and flexibility is high. Therefore, user experience is improved.

For example, a voice apparatus is disposed in the first terminal device, and the voice apparatus may collect and recognize sound information of the user. The user may enter voice information used to indicate to pause playing of a video, to enter the first instruction. The user may enter a video pause operation by using voice information, so that an operation of the user is simple and convenient, and flexibility is high. Therefore, user experience is improved. Specifically, when the user utters a voice instruction such as "Stop playing" or "Stop" to the first terminal device, the first terminal device receives and stops playing a video.

Certainly, the user may alternatively enter the first instruction by using another feasible implementation, and this is not specifically limited in this embodiment of this application.

In another feasible implementation, the first terminal device detects whether a preset condition is met, and generates the first instruction when the first terminal device detects that the preset condition is met.

For example, the preset condition may include at least one of the following conditions: Duration in which the first terminal device plays a video this time is greater than first duration; video play duration of the first terminal device in a preset time period is greater than second duration, where the preset time period may be one day, one week, or the like; duration of continuously using the first terminal device this time is greater than third duration; power of the first terminal device is less than preset power; signal strength of the first terminal device is less than preset strength; a temperature of the first terminal device (for example, a temperature of a central processing unit, a temperature of a main board, or a screen temperature) is greater than a preset temperature; and remaining traffic of the first terminal device is less than preset traffic.

Optionally, a user may preset the preset condition on the first terminal device.

In this feasible implementation, the first terminal device may automatically generate the first instruction based on the preset condition, to implement more accurate control on video playing.

In still another feasible implementation, the first terminal device receives a control instruction that is sent by a control device and that is used to instruct to pause playing of a video, and generates the first instruction based on the control instruction.

The control device is a device configured to control the first terminal device. For example, when the first terminal device is a television, the control device may be a device such as a remote control or a mobile phone.

Optionally, the control device may receive a control instruction entered by a user, and send the control instruction to the first terminal device after receiving the control instruction. For example, a physical key may be disposed in the control device, and the user may perform a pressing operation on the preset physical key to enter the control instruction into the control device, or the control device may have a touchscreen, and the user may perform a tap operation on a preset icon on the control device to enter the control instruction into the control device.

S203: The first terminal device responds to the first instruction to stop playing the first video in the first interface.

That the first terminal device stops playing the first video may be that the first terminal device pauses playing of an image of the first video and pauses playing of audio of the first video.

Optionally, after the first terminal device stops playing the first video, the first terminal device may further lock a screen or display a preset image corresponding to the first video.

When the first terminal device is a mobile phone or a computer, that the first terminal device locks a screen may be that the first terminal device switches to a locked state. When the first terminal device is in the locked state, the first terminal device can be unlocked only by using a preset password. When the first terminal device is a television, that the first terminal device locks a screen may be that the first terminal device turns off the screen (or is in a blank screen state)

The preset image may be an image used for visual protection, or the preset image may be an image related to the first video. For example, the image related to the first video may be an image of the first video that is being played when the first terminal device receives the first instruction, any image of the first video, or a poster cover of the first video. Optionally, the first terminal device may display the preset image after the screen is locked.

Optionally, if the first terminal device has a child mode and an adult mode, and the first video is played in the child mode, after the screen is locked, the first terminal device may switch a terminal mode to the adult mode, in other words, the first terminal device can be unlocked only by using a password corresponding to the adult mode. For example, content displayed by the first terminal device in the child mode and the adult mode is different. For example, in the child mode and the adult mode, applications displayed by the first terminal device are different, and/or interfaces of the applications are different. Unlock passwords of the first terminal device in the adult mode and the child mode are different. To be specific, when the first terminal device is in the child mode, the first terminal device can be unlocked only by using an unlock password corresponding to the child mode, and when the first terminal device is in the adult mode, the first terminal device can be unlocked only by using an unlock password corresponding to the adult mode.

S204: The first terminal device sends first information to a second terminal device.

The second terminal device is an audio device with an audio playing function. For example, the second terminal device may be a device such as a sound box, a mobile phone, or a computer.

The first terminal device is usually relatively close to the second terminal device. The first terminal device and the second terminal device may be located in a same home. For example, the first terminal device is a television in a living room, and the second device is a sound box in the living room, or the first terminal device is a mobile phone, and the second terminal device is a sound box in a living room. The first terminal device and the second terminal device may be located in a same office. For example, the first terminal device is a projector in a meeting room, and the second terminal is a sound box in the meeting room.

Optionally, the first terminal device may first determine the second terminal device, and then send the first information to the second terminal device.

Optionally, the first terminal device may determine the second terminal device by using at least the following two feasible implementations:

In a feasible implementation, configuration information is preset on the first terminal device. For example, the configuration information may be a device list, the device list includes an identifier of at least one audio device, and the first terminal device may determine the second terminal device based on the device identifier in the device list. The identifier of the audio device may be an internet protocol (internet protocol, IP) address, a media access control (media access control, MAC) address, a Bluetooth address, or the like of the audio device.

For example, if the first terminal device has a Bluetooth function, the first terminal device may search for a Bluetooth device in advance. If the first terminal device finds an audio device through Bluetooth, the first terminal device performs Bluetooth pairing with the audio device, and adds an identifier of a successfully paired audio device to the device list.

For example, if the first terminal device is connected to a local area network, the first terminal device may search for an audio device connected to the local area network. If the first terminal device finds an audio device connected to the local area network, the first terminal device adds an identifier of the audio device connected to the local area network to the device list.

Optionally, if the device list includes one device identifier, the first terminal device determines an audio device corresponding to the device identifier as the second terminal device.

Optionally, if the device list includes more than one device identifier, the first terminal device selects, from the device list, a device corresponding to the device identifier as the second terminal device. For example, the first terminal device may determine any reachable audio device in the device list as the second terminal device, or the first terminal device may determine, as the second terminal device, a reachable audio device that communicates with the first terminal device most recently. That an audio device is reachable means that the first terminal device can establish a communication connection to the audio device. For example, the first terminal device may send a request message to the audio device, and determine whether a response message is received within preset duration. If yes, the first terminal device determines that the audio device is reachable; otherwise, the first terminal device determines that the audio device is unreachable.

Optionally, to ensure that the second terminal device determined by the first terminal device based on the device list is reachable, a device identifier in a video playlist may be periodically updated.

In this feasible implementation, the device list is preset, so that the first terminal device can quickly determine the second terminal device based on the device list.

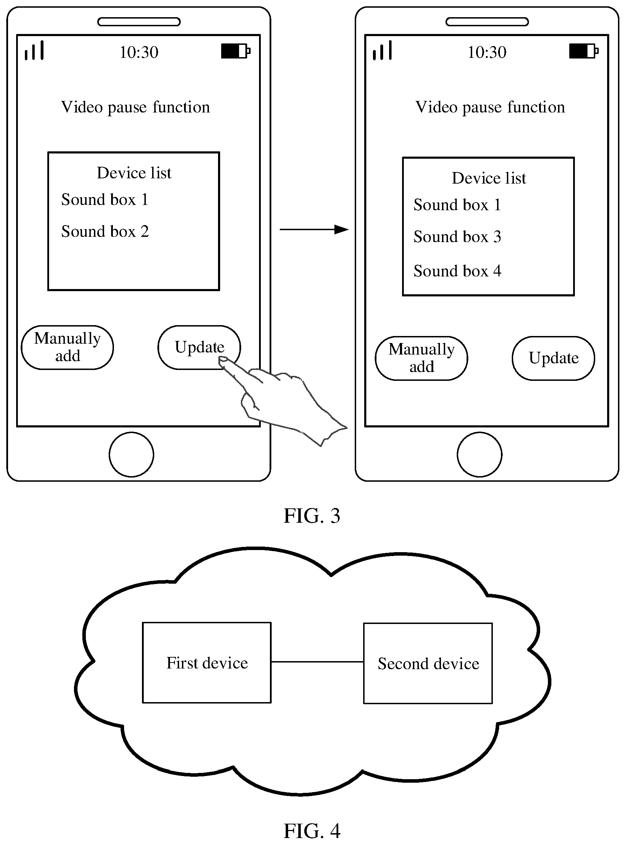

With reference to FIG. 3, the following uses an example in which the first terminal device is a mobile phone to describe this feasible implementation by using a specific example.

FIG. 3 is a schematic diagram of a device interface according to an embodiment of this application. As shown in FIG. 3, an interface 301 and an interface 302 are included.

In the interface 301, the first terminal device stores configuration information, and the configuration information may be a device list. The device list is initially empty. In an actual application process, the first terminal device may periodically update the device list, or the user may perform a tap operation on an "Update" icon, so that the first terminal device updates the device list.

In the interface 302, after the first terminal device updates the device list, a device identifier included in the device list may change. The interface may further include a "Manually add" icon. The user may tap the icon to manually add a device identifier to the device list. In this way, when the first terminal device cannot automatically find an audio device, a device identifier may be manually added to the device list.

In another feasible implementation, the first terminal device searches for a device, and determines a found reachable audio device as the second terminal device. The first terminal device may determine the first found reachable audio device as the second terminal device, or the first terminal device may determine, as the second terminal device, one of found reachable audio devices that has optimal quality of communication with the first terminal device.

For example, if the first terminal device has a Bluetooth function, the first terminal device may search for a reachable audio device through Bluetooth.

For example, if the first terminal device is connected to a local area network, the first terminal device may search for a reachable audio device connected to the local area network.

In this feasible implementation, when determining the second terminal device, the first terminal device directly determines the second terminal device through search. In this case, it is unnecessary to maintain the device list. Therefore, power consumption and storage space of the first terminal device are reduced.

Optionally, the first terminal device may first obtain the first information, and then send the first information to the second terminal device. The first terminal device may obtain the first information by using at least the following two feasible implementations:
In a feasible implementation, the first information is the first audio data.

The first terminal device obtains audio and video data corresponding to a video that is of the first video and that has not been played, and the first terminal device decomposes the audio and video data to obtain video data and audio data. The first terminal device may determine the decomposed audio data as the first audio data. In this case, the first audio data is audio data that has not been decoded. Alternatively, the first terminal device may decode the decomposed audio data to obtain decoded audio data, and determine the decoded audio data as the first audio data.

Optionally, the first terminal device may send the audio data to the second terminal device based on an audio play speed. For example, if the second terminal device plays 1 M audio data per second, the first terminal device may send the audio data to the second terminal device based on a transmission speed of 1 M/s. To avoid freezing in a process in which the second terminal device plays the audio data, some audio data may be buffered in the second terminal device. For example, when the second terminal device plays the tenth second of the audio data, audio data of the eleventh to thirteenth seconds is buffered in the second terminal device. To be specific, when the second terminal device plays the tenth second of the audio data, the first terminal device sends audio data of the fourteenth second to the second terminal device, when the second terminal device plays the eleventh second of the audio data, the first terminal device sends audio data of the fifteenth second to the second terminal device, and so on. In this way, the second terminal device can smoothly play the audio data without storing excessive data, and data storage space of the second terminal device is reduced.

Optionally, the first terminal device may send the audio data to the second terminal device based on a maximum transmission rate of the first terminal device. In this way, the first terminal device can complete transmitting the audio data to the second terminal device in a relatively short time. After the first terminal device completes transmitting the audio data to the second terminal device, the first terminal device may be disconnected from the second terminal device, or the first terminal device may pause operation. In this way, power consumption of the first terminal device can be reduced.

In this feasible implementation, the first terminal device sends the first audio data to the second terminal device, so that the second terminal device can quickly play the first audio data. In other words, after the first terminal device pauses playing of the first video, the second terminal device can quickly play the first audio data of the first video. A time interval between a moment at which the first terminal device pauses playing of the first video and a moment at which the second terminal device starts to play the first audio data is relatively short, so that user experience is better.

In an implementation not being part of the present invention, the first information may include video information of the first video and play progress of the first video.

The video information of the first video may include at least one of a name of the first video and a network address of the first video, and the network address of the first video may be a uniform resource locator (uniform resource locator, URL) address of the first video. The play progress of the first video may be the first play moment.

In this implementation not being part of the present invention, the first terminal device only needs to send the video information of the first video and the play progress of the first video to the second terminal device, so that an amount of data sent by the first terminal device to the second terminal device is relatively small, thereby reducing power consumption of the first terminal device. Further, after the first terminal device sends the video information and the play progress to the second terminal device, the first terminal device may be disconnected from the second terminal device, or the first terminal device may pause operation, so that power consumption of the first terminal device is further reduced.

The first terminal device may send the first information to the second terminal device by using at least the following two feasible implementations:

In a feasible implementation, the first terminal device and the second terminal device are directly connected.

In this case, the first terminal device may directly send the first information to the second terminal device.

That the first terminal device and the second terminal device are directly connected may be that the first terminal device and the second terminal device are directly connected through Bluetooth, the first terminal device and the second terminal device are directly connected through a wireless network, or the first terminal device and the second terminal device are directly connected through a wired network.

The following describes a device architecture in this implementation with reference to FIG. 4.

FIG. 4 is a schematic diagram of a device architecture according to an embodiment of this application. As shown in FIG. 4, a first terminal device and a second terminal device are included. The first terminal device and the second terminal device are directly connected. The first terminal device may be connected to the second terminal device in a wireline manner or in a wireless manner.

In another feasible implementation, the first terminal device and the second terminal device are connected by using a relay device.

The relay device is configured to forward data between the first terminal device and the second terminal device. For example, the relay device may be a device such as a router or a switch.

For example, the first terminal device, the second terminal device, and the relay device are located in a same local area network, and the first terminal device and the second terminal device are separately connected to the relay device.

In this case, the first terminal device may send the first information to the relay device, where the first information may carry address information of the second terminal device, so that the relay device sends the first information to the second terminal device based on the address information of the second terminal device.

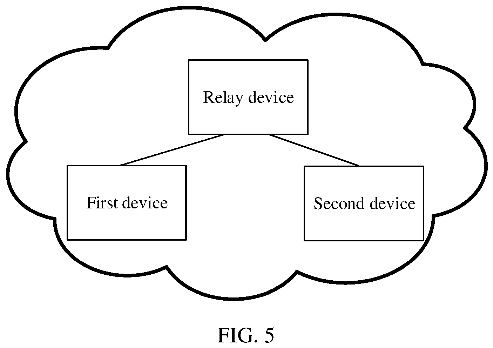

The following describes a device architecture in this implementation with reference to FIG. 5.

FIG. 5 is a schematic diagram of another device architecture according to an embodiment of this application. As shown in FIG. 5, a first terminal device, a relay device, and a second terminal device are included, the first terminal device and the relay device are connected, and the second terminal device and the relay device are connected. The first terminal device may be connected to the relay device in a wireline manner or in a wireless manner. The second terminal device may also be connected to the relay device in a wireline manner or in a wireless manner.

S205: The second terminal device plays the first audio data based on the first information.

Optionally, when content included in the first information is different, a process in which the second terminal device plays the first audio data is also different. The following two feasible implementations may be included:
In one feasible implementation, the first information is the first audio data.

In this feasible implementation, after receiving the first audio data, the second terminal device may determine whether the first audio data is decoded. If the first audio data is decoded audio data, the second terminal device plays the first audio data, or if the first audio data is audio data that has not been decoded, the second terminal device may first decode the first audio data, and then play decoded audio data.

In this feasible implementation, because the second terminal device can directly receive the first audio data from the first terminal device, the second terminal device can quickly play the first audio data. In other words, after the first terminal device pauses playing of the first video, the second terminal device can quickly play the first audio data of the first video. A time interval between a moment at which the first terminal device pauses playing of the first video and a moment at which the second terminal device starts to play the first audio data is relatively short, so that user experience is better.

In an implementation not being part of the present invention, the first information includes the video information of the first video and the play progress of the first video.

In this feasible implementation not being part of the present invention, the second terminal device may obtain corresponding audio data from a network based on the video information and the play progress. The obtained audio data is audio data of the first video after the play progress. The second terminal device decodes the audio data, and plays decoded audio data.

In this feasible implementation not being part of the present invention, the first terminal device only needs to send the video information of the first video and the play progress of the first video to the second terminal device, so that an amount of data sent by the first terminal device to the second terminal device is relatively small, thereby reducing power consumption of the first terminal device. Further, after the first terminal device sends the video information and the play progress to the second terminal device, the first terminal device may be disconnected from the second terminal device, or the first terminal device may pause operation, so that power consumption of the first terminal device is further reduced.

Optionally, after the second terminal device completes playing the first audio data, the second terminal device may pause operation. Alternatively, the second terminal device may play the first audio data for preset duration, and after the preset duration, the second terminal device may pause operation or play other content. For example, a sound box may play preset music or a preset story, or a sound box may determine to-be-played content based on current time. When the current time is sleep time, the sound box may play hypnotic music or a hypnotic story; or when the current time is activity time, the sound box may play lively music, or the like.

According to the audio and video playing method provided in this embodiment of this application, in the process in which the first terminal device plays the first video in the first interface, after the first terminal device obtains the first instruction, the first terminal device responds to the first instruction to stop playing the first video in the first interface and send the first information to the second terminal device, so that the second terminal device continues to play audio of the first video. Therefore, flexibility of playing audio and video is improved.

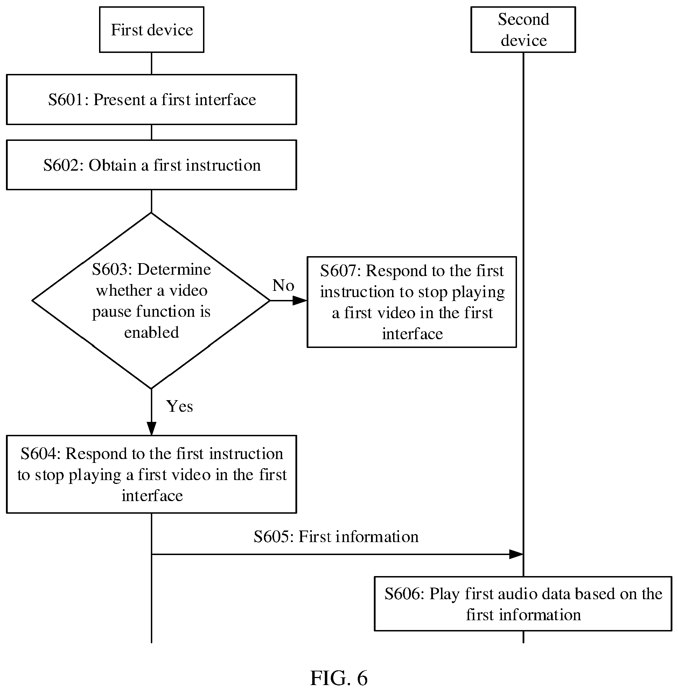

Based on any one of the foregoing embodiments, the following describes a video processing method with reference to the embodiment described in FIG. 6.

FIG. 6 is a schematic flowchart of another video processing method according to an embodiment of this application. As shown in FIG. 6, the method may include the following steps.

S601: A first terminal device presents a first interface.

The first interface includes a play interface for a first video.

S602: The first terminal device obtains a first instruction.

It should be noted that, for a process of performing S601 and S602, refer to a process of performing S201 and S202. Details are not described herein again.

S603: The first terminal device determines whether a video pause function is enabled.

If yes, S604 to S606 are performed.

If no, S607 is performed.

The video pause function means that audio data in a video may continue to be played in a second terminal device after the first terminal device pauses playing of the video.

Optionally, a status of the video pause function is set on the first terminal device, and the status of the video pause function is an enabled state or a disabled state. The first terminal device may obtain the status of the video pause function, and determine, based on the status of the video pause function, whether the video pause function is enabled.

Optionally, the status of the video pause function may be set by using the following feasible implementations:
In a feasible implementation, a status option corresponding to the video pause function is set on the first terminal device, and a user may perform an operation on the status option to set the status of the video pause function.

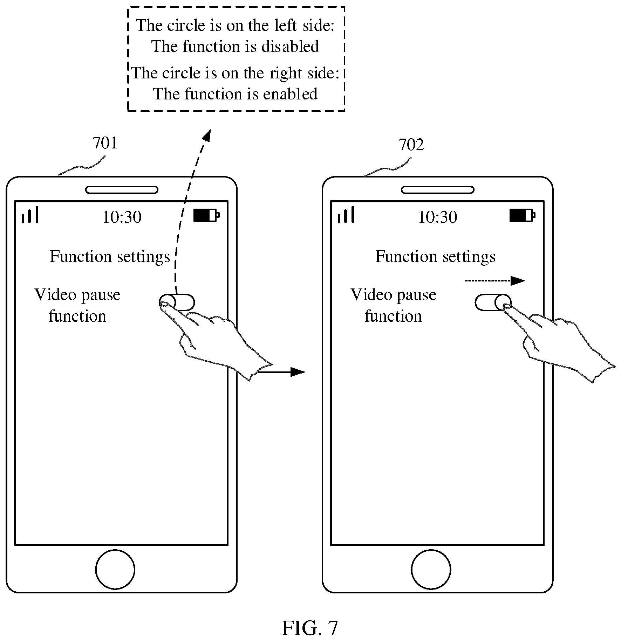

The following describes this feasible implementation with reference to FIG. 7.

FIG. 7 is a schematic diagram of another device interface according to an embodiment of this application. As shown in FIG. 7, an interface 701 and an interface 702 are included.

In the interface 701, the status switch of the video pause function is included, and the user may perform a sliding operation on a circular control of the status option to set the status of the video pause function. For example, when the circular control is located on a left side of the status option, the status option indicates an off state, and the status of the video pause function is in the disabled state: or when the circular control is located on a right side of the status option, the status option indicates an on state, and the status of the video pause function is in the enabled state.

In the interface 702, when the user needs to enable the video pause function for the first terminal device, the user may slide the circular control rightward until the circular control is located on the right side of the status option, where the status option indicates the on state, and the status of the video pause function is in the enabled state.

In this feasible implementation, the user may set the status of the video pause function based on an actual requirement, so that flexibility of setting the status of the video pause function is relatively high.

In another feasible implementation, the first terminal device may detect whether a reachable audio device exists. If yes, the first terminal device sets the status of the video pause function to the enabled state; or if no, the first terminal device sets the status of the video pause function to the disabled state. Optionally, the first terminal device may periodically update the status of a video function, in other words, the first terminal device periodically detects whether a reachable audio device exists, and sets the status of the video pause function.

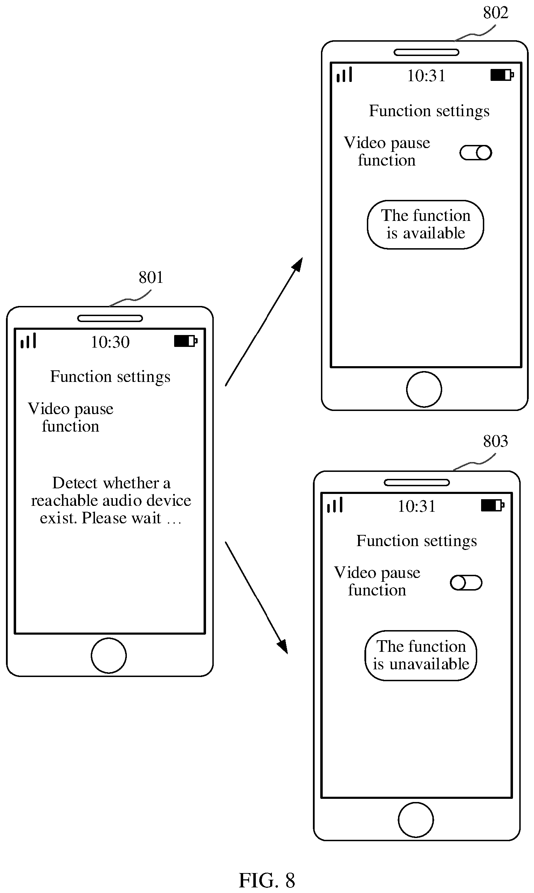

The following describes this feasible implementation with reference to FIG. 8.

FIG. 8 is a schematic diagram of still another device interface according to an embodiment of this application. As shown in FIG. 8, an interface 801 to an interface 803 are included.

In the interface 801, the first terminal device may periodically detect whether a reachable audio device exists.

In the interface 802, if the first terminal device detects a reachable audio device, the first terminal device sets the status of the video pause function to the enabled state, and the first terminal device may further display "The function is available".

In the interface 803, if the first terminal device does not detect a reachable audio device, the first terminal device sets the status of the video pause function to the disabled state, and the first terminal device may further display "The function is unavailable".

In this feasible implementation, the first terminal device may automatically set the status of the video pause function depending on whether a reachable audio device exists, and when the status of the video pause function is the enabled state, it can be ensured that the first terminal device can determine the second terminal device.

In still another feasible implementation, the first terminal device may detect whether a reachable audio device exists. If yes, the first terminal device displays a first status option, where a status of the first status option is adjustable, in other words, a user may turn on the first status option or turn off the first status option based on an actual requirement; or if no, the first terminal device displays a second status option, where a status of the second status option is nonadjustable, and the second status option indicates an off state. In other words, when the first terminal device detects a reachable audio device, the user may choose, based on an actual requirement, whether to enable the video pause function; or when the first terminal device has not detected a reachable audio device, the status of the video pause function may only be the disabled state.

Optionally, the first terminal device periodically detects whether a reachable audio device exists, and adjusts a displayed status option based on a detection result.

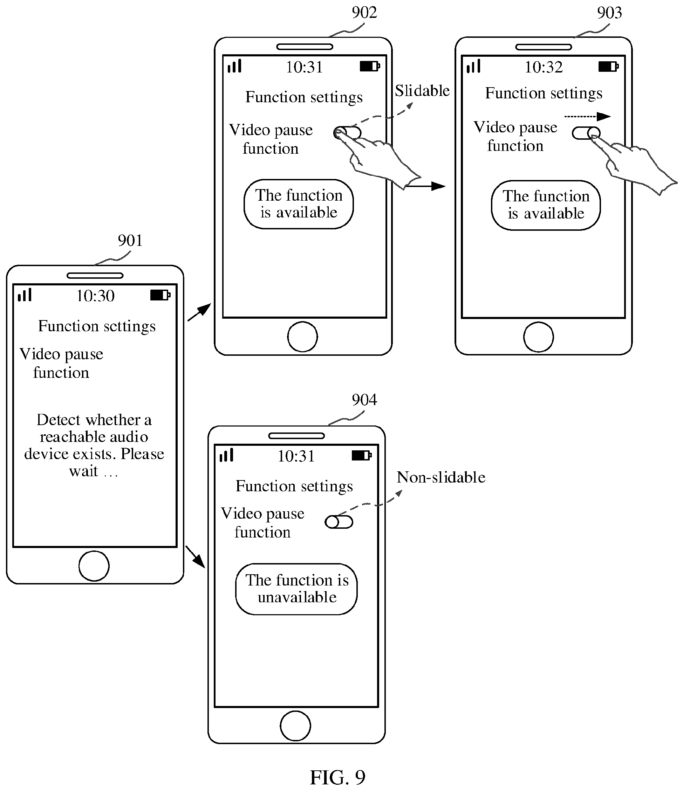

The following describes this feasible implementation with reference to FIG. 9.

FIG. 9 is a schematic diagram of yet another device interface according to an embodiment of this application. As shown in FIG. 9, an interface 901 to an interface 904 are included.

In the interface 901, the first terminal device may periodically detect whether a reachable audio device exists.

In the interface 902, if the first terminal device detects a reachable audio device, the first terminal device displays the first status option, where a circular control of the first status option is slidable, and the first terminal device may further display "The function is available". Optionally, when displaying the interface 902, the first terminal device may set the status of the first status option to an off state by default, in other words, the status of the video pause function is the disabled state.

In the interface 903, when the user needs to turn on the first status option, the user may perform a sliding operation on the circular control of the first status option. For example, the user may slide the circular control to a right side of the first status option to set the status of the video pause function to the enabled state.

In the interface 904, if the first terminal device has not detected a reachable audio device, the first terminal device displays the second status option, where the status of the second status option indicates the off state, and a circular control of the second status option is non-slidable, and the first terminal device may further display "The function is unavailable", in other words, the status of the video pause function is the disabled state, and the user cannot set the status of the video pause function to the enabled state.

S604: The first terminal device responds to the first instruction to stop playing the first video in the first interface.

S605: The first terminal device sends first information to the second terminal device.

S606: The second terminal device plays first audio data based on the first information.

It should be noted that, for a process of performing S603 to S606, refer to a process of performing S202 to S205. Details are not described herein again.

S607: The first terminal device responds to the first instruction to stop playing the first video in the first interface.

In S607, after the first terminal device pauses playing of the first video, the user may further enter a video playing instruction, so that the first terminal device continues to play the first video.

In the embodiment shown in FIG. 6, in a process in which the first terminal device plays the first video in the first interface, after the first terminal device obtains the first instruction, and when the first terminal device determines that the video pause function is enabled, the first terminal device responds to the first instruction to stop playing the first video in the first interface and send the first information to the second terminal device, so that the second terminal device continues to play audio of the first video.

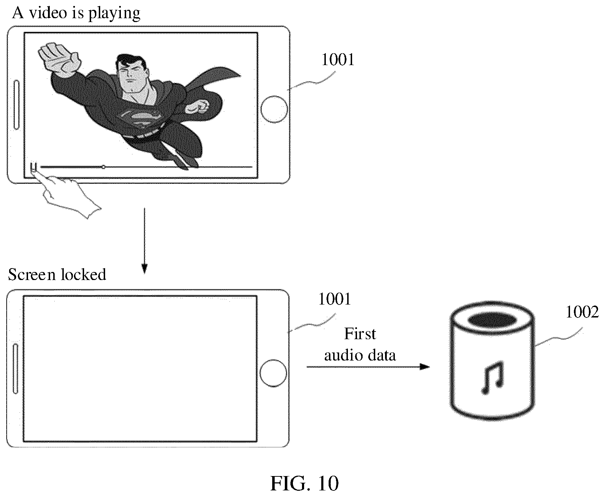

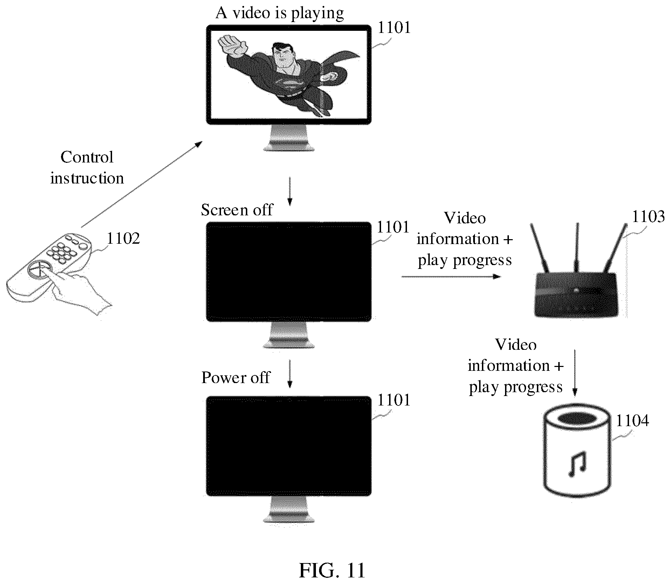

Based on any one of the foregoing embodiments, the following describes, with reference to FIG. 10 and FIG. 11 by using a specific example, the video processing method described in the foregoing method embodiment.

FIG. 10 is a schematic diagram of a video processing process according to an embodiment of this application. As shown in FIG. 10, a first terminal device 1001 and a second terminal device 1002 are included. The first terminal device 1001 is a mobile phone, and the second terminal device 1002 is a sound box.

As shown in FIG. 10, a video play application is installed on the mobile phone, and a video is played by using the video play application. A video play interface on the mobile phone includes a pause icon (a double-vertical-line icon shown in FIG. 10), and a user may perform a tap operation on the pause icon to enter a video pause operation.

After the user performs the tap operation on the pause icon, the mobile phone determines whether a video pause function is enabled. If the video pause function is not enabled, the mobile phone pauses playing of a video, and displays a currently played video image, and the video image does not change. The mobile phone may further switch the pause icon to a continue to play icon (not shown in the figure).

If the video pause function is enabled, the mobile phone pauses playing of a video, and locks a screen. The mobile phone determines, according to the method described in the foregoing method embodiment, that the second terminal device is a sound box, and sends first audio data of the video to the sound box. Optionally, if the video currently played by the mobile phone is an online video, after the mobile phone locks the screen, the mobile phone continues to download the video, obtains the first audio data from the downloaded video, and sends the audio data to the sound box. After the mobile phone completes sending the first audio data to the sound box, the mobile phone may disable the video play application, be powered off, or the like.

After the sound box receives the first audio data, the sound box plays the first audio data.

It should be noted that in this example, alternatively, the mobile phone may send the first audio data to the sound box by using a relay device, or the mobile phone may send video information and play progress to the sound box. For a specific process, refer to the foregoing embodiment. Details are not described herein again.

In the foregoing process, in a process in which the mobile phone plays the video, after the mobile phone obtains a first instruction, when determining that the video pause function of the mobile phone is enabled, the mobile phone may pause playing of the video, lock the screen, and request the sound box to continue to play audio of the video, so that flexibility of playing audio and video is improved. For example, in the foregoing method, in a process in which a child watches a video via the mobile phone, playing of the video via the mobile phone may be paused, and audio of the video may continue to be played via the sound box. The child can be prevented from watching the video for an excessively long time, and a bad emotion of the child can be prevented after the video is closed. Therefore, user experience is improved.

FIG. 11 is a schematic diagram of another video processing process not being part of the present invention. As shown in FIG. 11, a first terminal device 1101, a control device 1102, a relay device 1103, and a second terminal device 1004 are included. The first terminal device 1101 is a television, the control device 1102 is a remote control, the relay device 1103 is a router, and the second terminal device 1104 is a sound box.

As shown in FIG. 11, in a video playing process of the television, a user may control the television by using the remote control. For example, the user may perform a pressing operation on a pause key on the remote control, so that the remote control sends, to the television, a control instruction used to instruct the television to pause playing of a video.

After the television receives the control instruction sent by the remote control, the television determines whether a video pause function is enabled. If the video pause function is not enabled, the television pauses playing of the video, and displays a currently played video image, and the video image does not change.

If the video pause function is enabled, the television pauses playing of the video, and turns off a screen. The television determines, according to the method described in the foregoing method embodiment, that the second terminal device is a sound box. Assuming that the television and the sound box are connected by using the router, the television sends video information and play progress to the router, and then the router sends the video information and the play progress to the sound box. The television may be powered off after the television sends the video information and the play progress to the router.

After the sound box receives the video information and the play progress, the sound box may download first audio data from a network based on the video information and the play progress, and play the first audio data.

It should be noted that in this example, alternatively, the television may directly send the video information and the play progress to the sound box, or the television may send the first audio data to the sound box. For a specific process, refer to the foregoing embodiment. Details are not described herein again.

In the foregoing process, in a process in which the television plays the video, after the television obtains a first instruction, when determining that the video pause function of the television is enabled, the television may pause playing of the video, lock the screen, and request the sound box to continue to play audio of the video, so that flexibility of playing audio and video is improved. For example, in the foregoing method, in a process in which a child watches a video via the television, playing of the video via the television may be paused, and audio of the video may continue to be played via the sound box. The child can be prevented from watching the video for an excessively long time, and a bad emotion of the child can be prevented after the video is closed. Therefore, user experience is improved.

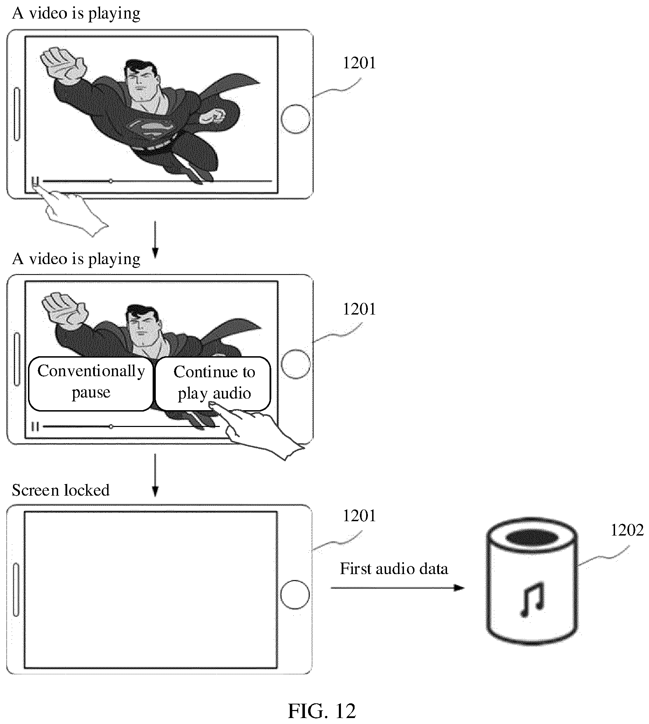

Optionally, based on any one of the foregoing embodiments, in a process in which the first terminal device plays the first video, after the first terminal device obtains a video pause instruction, the first terminal device may further generate a prompt box, so that the user selects a video pause manner. The following describes this feasible implementation with reference to FIG. 12.

FIG. 12 is a schematic diagram of still another video processing process according to an embodiment of this application. As shown in FIG. 12, a first terminal device 1201 and a second terminal device 1202 are included. The first terminal device 1201 is a mobile phone, and the second terminal device 1202 is a sound box.

As shown in FIG. 12, a video play application is installed on the mobile phone, and a video is played by using the video play application. A video play interface on the mobile phone includes a pause icon (a double-vertical-line icon shown in FIG. 10), and a user may perform a tap operation on the pause icon to enter a video pause operation.

After the user performs the tap operation on the pause icon, the mobile phone generates and displays two selection boxes: "Conventionally pause" and "Continue to play audio". If the user enters a tap operation into the "Conventionally pause" selection box, the mobile phone conventionally pauses a video.

If the user enters a tap operation into the "Continue to play audio" selection box, the mobile phone determines, according to the method described in the foregoing method embodiment, that the second terminal device is a sound box, and sends first audio data of the video to the sound box. Optionally, if the video currently played by the mobile phone is an online video, after the mobile phone locks a screen, the mobile phone continues to download the video, obtains the first audio data from the downloaded video, and sends the audio data to the sound box. After the mobile phone completes sending the first audio data to the sound box, the mobile phone may disable the video play application, be powered off, or the like.

After the sound box receives the first audio data, the sound box plays the first audio data.

It should be noted that in this example, alternatively, the mobile phone may send the first audio data to the sound box by using a relay device. For a specific process, refer to the foregoing embodiment. Details are not described herein again.

In the foregoing process, in a process in which the mobile phone plays the video, after the mobile phone obtains a first instruction, when determining that a video pause function of the mobile phone is enabled, the mobile phone may pause playing of the video, lock the screen, and request the sound box to continue to play audio of the video, so that flexibility of playing audio and video is improved. For example, in the foregoing method, in a process in which a child watches a video via the mobile phone, playing of the video via the mobile phone may be paused, and audio of the video may continue to be played via the sound box. The child can be prevented from watching the video for an excessively long time, and a bad emotion of the child can be prevented after the video is closed. Therefore, user experience is improved.

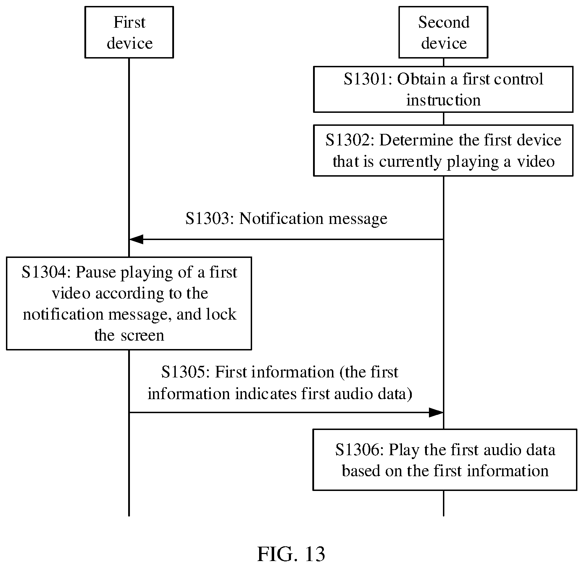

Optionally, based on any one of the foregoing embodiments, the user may further control the second terminal device. The second terminal device searches for a first terminal device that is currently playing a video, and controls the first terminal device to pause playing of a video. The second terminal device continues to play audio data of the video. The following describes this feasible implementation by using a method described in the embodiment in FIG. 13.

FIG. 13 is a schematic flowchart of still another video processing method according to an embodiment of this application. As shown in FIG. 13, the method may include the following steps.

S1301: A second terminal device obtains a first control instruction, where the first control instruction is used to instruct the second terminal device to instruct a first terminal device currently playing a first video to pause playing of the first video, and instruct the second terminal device to continue to play first audio data of the first video.

Optionally, the second terminal device may obtain the first control instruction by using the following feasible implementations:
In a feasible implementation, the second terminal device receives voice information entered by a user, and performs recognition processing on the voice information. If it is found through recognition that the voice information entered by the user is preset voice information, the second terminal device generates the first control instruction.

For example, the preset voice information may be "Hi, please take over the video" or "Hi, pause the video and continue with audio". The preset voice information may be set based on an actual requirement.

In another feasible implementation, a physical key or a display icon is set on the second terminal device, and the second terminal device receives a preset operation entered by a user for the physical key or the display icon, and generates the first control instruction based on the preset operation entered by the user.

S1302: The second terminal device determines the first terminal device that is currently playing a video.

Optionally, the second terminal device may determine, by using the following feasible implementations, the first terminal device that is currently playing a video:
In a feasible implementation, a list of video devices with a video playing function is set on the second terminal device, and the second terminal device separately sends a query request to the video devices in the list of video devices. If a video device is currently playing a video, the video device sends a first response message to the second terminal device. If a video device is not currently playing a video, the video device sends a second response message to the second terminal device. The second terminal device may determine, based on a received response message, the first terminal device that is currently playing a video.

Optionally, if the second terminal device determines one video device that is currently playing a video, the second terminal device determines the video device as the first terminal device. If the second terminal device determines a plurality of video devices that are currently playing videos, the second terminal device selects any one of the video devices as the first terminal device, or displays the plurality of video devices that are currently playing videos to the user, so that the user selects one video device as the first terminal device.

In another feasible implementation, a list of video devices with a video playing function is set on the second terminal device, the second terminal device displays the list of video devices to the user, and the user selects one video device from the list of video devices as the first terminal device. The video device selected by the user is a video device that is currently playing a video.

S1303: The second terminal device sends a notification message to the first terminal device.

The notification message is used to indicate the first terminal device to pause playing of the video.

Optionally, the notification message may be further used to indicate the first terminal device to lock a screen, or the like.

S1304: The first terminal device pauses playing of the first video according to the notification message.

It should be noted that, for a process of performing S1304, refer to a process of performing S202. Details are not described herein again.

Optionally, the first terminal device may further lock the screen according to the notification message.

S1305: The first terminal device sends first information to the second terminal device.

S1306: The second terminal device plays first audio data based on the first information.

It should be noted that, for a process of performing S1304 and S1305, refer to a process of performing S204 and S205. Details are not described herein again.

In the embodiment shown in FIG. 13, in a process in which the first terminal device plays the first video, the user controls the second terminal device, so that the first terminal device can be controlled to pause playing of the first video and lock the screen, and the second terminal device continues to play audio of the video. Therefore, flexibility of playing audio and video is improved. For example, in a process in which a child watches a video via the first terminal device, a parent can use the second terminal device to control the first terminal device to pause playing of the first video and control the second terminal device to continue to play audio of the first video. The child is unaware of the process in which the parent controls the video to pause, so that the child can be prevented from watching the video for an excessively long time, and a bad emotion of the child when the video is closed can be prevented. Therefore, user experience is improved.

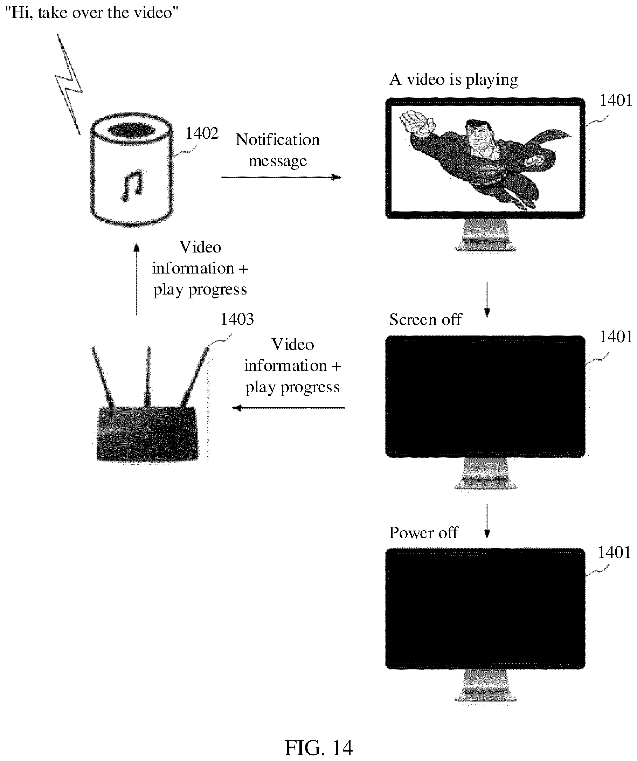

The following describes, with reference to FIG. 14 by using a specific example, the method described in the embodiment in FIG. 13.

FIG. 14 is a schematic diagram of yet another video processing process not being part of the present invention. As shown in FIG. 14, a first terminal device 1401, a second terminal device 1402, and a relay device 1403 are included. The first terminal device 1401 is a television, the second terminal device 1402 is a sound box, and the relay device 1403 is a router.

As shown in FIG. 14, in a video playing process of the television, when a user requires the television to pause playing of a video and audio and requires the sound box to continue to play the audio, the user may say "Hi, take over the video" to the sound box. The sound box performs recognition processing on the voice information, and when it is found through recognition that the voice information is preset voice information, the sound box determines the television according to the method described in the embodiment in FIG. 13, and sends a notification message to the television.

The television pauses playing of the video and turns off a screen according to the notification message sent by the sound box. Assuming that the television and the sound box are connected by using a router, the television sends video information and play progress to the router, and then the router sends the video information and the play progress to the sound box. The television may be powered off after the television sends the video information and the play progress to the router.

After the sound box receives the video information and the play progress, the sound box may download first audio data from a network based on the video information and the play progress, and play the first audio data.

It should be noted that in this example, alternatively, the television may directly send the video information and the play progress to the sound box, or the television may send the first audio data to the sound box. For a specific process, refer to the foregoing embodiment. Details are not described herein again.

In the foregoing process, in the video playing process of the television, the user controls the sound box, so that the television can be controlled to pause playing of the video and lock the screen, and the sound box continues to play audio of the video. Therefore, flexibility of playing audio and video is improved. For example, in a process in which a child watches a video via the television, a parent can use the sound box to control the television to pause playing of the video and control the sound box to continue to play audio of the video. The child is unaware of the process in which the parent controls the video to pause, so that the child can be prevented from watching the video for an excessively long time, and a bad emotion of the child when the video is closed can be prevented. Therefore, user experience is improved.

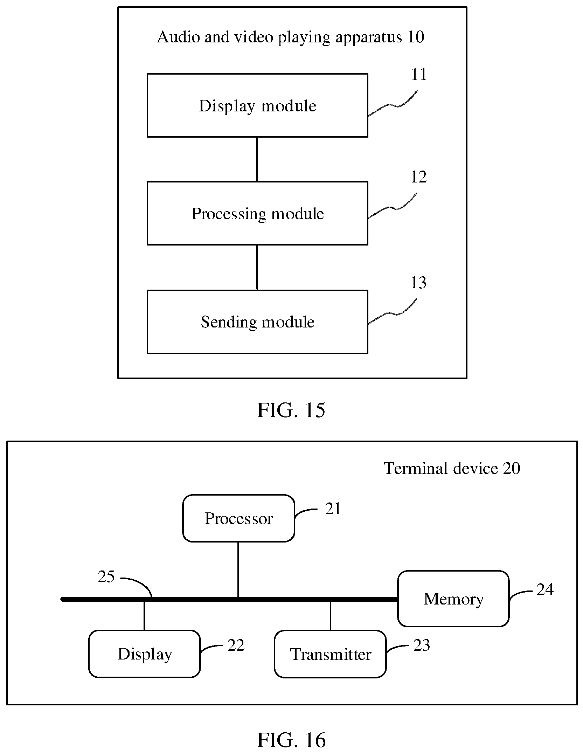

FIG. 15 is a schematic diagram of a structure of an audio and video playing apparatus according to an embodiment of this application. As shown in FIG. 15, the audio and video playing apparatus 10 includes a display module 11, a processing module 12, and a sending module 13.

The display module 11 is configured to present a first interface, where the first interface includes a play interface for a first video.

The processing module 12 is configured to respond to a first instruction to stop playing the first video in the first interface.

The sending module 13 is configured to send first information to a second terminal device.

The first information is used to enable the second terminal device to play first audio data, the first information is the first audio data, the first audio data is audio data of the first video after a first play moment, and the first play moment is a play moment at which the first terminal device stops playing the first video.

Optionally, the display module 11 may perform S201 in the embodiment in FIG. 2 and S601 in the embodiment in FIG. 6.

Optionally, the processing module 12 may perform S202 and S203 in the embodiment in FIG. 2 and S602 to S604 and S607 in the embodiment in FIG. 6.

Optionally, the sending module 13 may perform S204 in the embodiment in FIG. 2 and S605 in the embodiment in FIG. 6.

It should be noted that the audio and video playing apparatus provided in this embodiment of this application may be applied to the first terminal device described in the foregoing method embodiment, the audio and video playing apparatus may execute the technical solution described in the foregoing method embodiment. Implementation principles and beneficial effects of the audio and video playing apparatus are similar to those in the foregoing method embodiments, and details are not described herein again.

In a possible implementation, the processing module 12 is specifically configured to: when determining that a preset function is in an enabled state, respond to the first instruction to stop playing the first video in the first interface, where the preset function is used to indicate to play audio of a video via another device when playing of the video is paused.

In a possible implementation, before the processing module 12 responds to the first instruction, the processing module 12 is further configured to:
receive the first instruction entered by a user into the first terminal device; or
generate the first instruction when detecting that video play duration is greater than preset duration.

In a possible implementation, the processing module 12 is further configured to lock a screen after the processing module 12 stops playing the first video in the first interface; or
the display module 11 is further configured to display a preset image corresponding to the first video after the processing module 12 stops playing the first video in the first interface.

In a possible implementation, the sending module 13 is specifically configured to:
establish a network connection to the second terminal device; and
send the first information to the second terminal device through the network connection.

In a possible implementation, the sending module 13 is specifically configured to:
obtain address information of the second terminal device from configuration information, and establish the network connection to the second terminal device based on the address information of the second terminal device, where the configuration information is preconfigured on the first terminal device; or
search a network in which the first terminal device is located for an audio device, to obtain address information of the second terminal device, and establish the network connection to the second terminal device based on the address information of the second terminal device, where the audio device is a device with an audio playing function.

In a possible implementation, the sending module 13 is specifically configured to:
establish a Bluetooth connection to the second terminal device; and
send the first information to the second terminal device through the Bluetooth connection.

In a possible implementation, the second terminal device is a terminal device that can receive audio data sent by the first terminal device and play the audio data.

It should be noted that the audio and video playing apparatus provided in this embodiment of this application may perform the technical solutions described in the foregoing method embodiments. Implementation principles and beneficial effects of the audio and video playing apparatus are similar to those of the technical solutions, and details are not described herein again.

FIG. 16 is a schematic diagram of a structure of a terminal device according to an embodiment of this application. As shown in FIG. 16, a terminal device 20 may include a processor 21, a display 22, a transmitter 23, and a memory 24. The processor 21 executes program instructions in the memory 24. For example, the processor 21, the display 22, the transmitter 23, and the memory 24 may communicate by using a communications bus 25.

The display 22 is configured to present a first interface, where the first interface includes a play interface for a first video.

The processor 21 is configured to respond to a first instruction to stop playing the first video in the first interface.

The transmitter 23 is configured to send first information to a second terminal device.

The first information is used to enable the second terminal device to play first audio data, the first information is the first audio data, the first audio data is audio data of the first video after a first play moment, and the first play moment is a play moment at which the first terminal device stops playing the first video.

Optionally, the processor 21 shown in this application can implement a function of the processing module 12 in the embodiment in FIG. 15, the display 22 can implement a function of the display module 11 in the embodiment in FIG. 15, and the transmitter 23 can implement a function of the sending module 13 in the embodiment in FIG. 15.

Optionally, the processor 21 may be a central processing unit (central processing unit, CPU), or may be another general-purpose processor, a DSP, an application-specific integrated circuit (application-specific integrated circuit, ASIC), or the like. The general-purpose processor may be a microprocessor, or the processor may be any conventional processor or the like. Steps in the embodiments of the authentication methods disclosed with reference to this application may be directly performed by a hardware processor, or may be performed by using a combination of hardware in the processor and a software module.

It should be noted that the terminal device provided in this embodiment of this application may perform the technical solutions described in the foregoing method embodiments. Implementation principles and beneficial effects of the terminal device are similar to those of the technical solutions, and details are not described herein again.

In a possible implementation, the processor 21 is specifically configured to: when determining that a preset function is in an enabled state, respond to the first instruction to stop playing the first video in the first interface, where the preset function is used to indicate to play audio of a video via another device when playing of the video is paused.

In a possible implementation, before the processor 21 responds to the first instruction, the processor 21 is further configured to:
receive the first instruction entered by a user into the first terminal device; or
generate the first instruction when detecting that video play duration is greater than preset duration.

In a possible implementation, the processor 21 is further configured to lock a screen after the processor 21 stops playing the first video in the first interface; or
the display 22 is further configured to display a preset image corresponding to the first video after the processor 21 stops playing the first video in the first interface.

In a possible implementation, the processor 21 is further configured to establish a network connection to the second terminal device; and
the transmitter 23 is specifically configured to send the first information to the second terminal device through the network connection.

In a possible implementation, the processor 21 is specifically configured to:
obtain address information of the second terminal device from configuration information, and establish the network connection to the second terminal device based on the address information of the second terminal device, where the configuration information is preconfigured on the first terminal device; or
search a network in which the first terminal device is located for an audio device, to obtain address information of the second terminal device, and establish the network connection to the second terminal device based on the address information of the second terminal device, where the audio device is a device with an audio playing function.

In a possible implementation, the processor 21 is further configured to establish a Bluetooth connection to the second terminal device; and
the transmitter 21 is specifically configured to send the first information to the second terminal device through the Bluetooth connection.

In a possible implementation, the second terminal device is a terminal device that can receive audio data sent by the first terminal device and play the audio data.

It should be noted that the terminal device provided in this embodiment of this application may perform the technical solutions described in the foregoing method embodiments. Implementation principles and beneficial effects of the terminal device are similar to those of the technical solutions, and details are not described herein again.

An embodiment of this application provides a storage medium. The storage medium is configured to store a computer program. The computer program is used to implement the audio and video playing method in the foregoing embodiments.

An embodiment of this application provides a chip. The chip is configured to support a terminal device (for example, the first terminal device in the method embodiment) in implementing functions (for example, presenting a first interface, responding to a first instruction, and sending first information) described in the embodiments of this application. The chip is specifically used in a chip system. The chip system may include the chip, or may include the chip and another discrete component. When the foregoing methods are implemented by using a chip in a terminal device, the chip includes a processing unit. Further, the chip may further include a communications unit. The processing unit may be, for example, a processor. When the chip includes the communications unit, the communications unit may be, for example, an input/output interface, a pin, or a circuit. The processing unit performs all or some of actions performed by each processing module (for example, the processing module in FIG. 15) in the embodiments of this application, and the communications unit may perform a corresponding receiving or sending action, for example, send first information to a second terminal device. In another specific embodiment, a processing module of the terminal device in this application may be the processing unit of the chip, and a receiving module or a sending module of the terminal device may be the communications unit of the chip.

All or some of the steps in the method embodiments may be implemented by hardware related to program instructions. The foregoing program may be stored in a readable memory. When the program is executed, the steps of the foregoing method embodiments are performed. The foregoing memory (storage medium) includes a read-only memory (read-only memory, ROM), a RAM, a flash memory, a hard disk, a solid-state drive, a magnetic tape (magnetic tape), a floppy disk (floppy disk), an optical disc (optical disc), and any combination thereof.

The embodiments of this application are described with reference to the flowcharts and/or block diagrams of the method, the device (system), and the computer program product according to the embodiments of this application. It should be understood that computer program instructions may be used to implement each procedure and/or each block in the flowcharts and/or the block diagrams and a combination of a process and/or a block in the flowcharts and/or the block diagrams. These computer program instructions may be provided for a general-purpose computer, a dedicated computer, an embedded processor, or a processing unit of another programmable data processing device to generate a machine, so that instructions executed by the computer or the processing unit of the another programmable data processing device generate an apparatus for implementing a specific function in one or more processes in the flowcharts and/or in one or more blocks in the block diagrams.

These computer program instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to the embodiments of this application without departing from the scope of this application. This application is intended to cover these modifications and variations to the embodiments of this application provided that the modifications and variations fall within the scope of protection defined by the following claims.

In this application, the term "include" and variations thereof may mean non-limitative inclusion; and the term "or" and variations thereof may mean "and/or". In this application, the terms "first", "second", and the like are intended to distinguish between similar objects but do not necessarily indicate a specific order or sequence. In this application, "a plurality of" means two or more than two. The term "and/or" describes an association relationship for describing associated objects and represents that three relationships may exist. For example, A and/or B may represent the following three cases: Only A exists, both A and B exist, and only B exists. The character "/" usually represents an "or" relationship between the associated objects.

## Claims

1. An audio and video playing method, comprising:
presenting, by a first terminal device, a first interface, wherein the first interface comprises a play interface for a first video; and
responding, by the first terminal device, to a first instruction to stop playing the first video in the first interface and send first information to a second terminal device, wherein
the first terminal device obtains the first instruction by using at least one of the following three implementations:
a. the first terminal device receives the first instruction entered by a user into the first terminal device,
b. the first terminal device detects whether a preset condition is met, and generates the first instruction when the first terminal device detects that the preset condition is met, and
c. the first terminal device receives a control instruction that is sent by a control device and that is used to instruct to pause playing of a video, and generates the first instruction based on the control instruction,
the first information is first audio data and used to enable the second terminal device to play the first audio data, the first audio data is audio data of the first video after a first play moment, and the first play moment is a play moment at which the first terminal device stops playing the first video.

2. The method according to claim 1, wherein the responding, by the first terminal device, to a first instruction to stop playing the first video in the first interface and send first information to a second terminal device comprises:
when the first terminal device determines that a preset function is in an enabled state, responding, by the first terminal device, to the first instruction to stop playing the first video in the first interface and send the first information to the second terminal device, wherein the preset function is used to indicate to play audio of a video via another device when playing of the video is paused.

3. The method according to claim 1 or 2, before the responding, by the first terminal device, to a first instruction, further comprising:
generating, by the first terminal device, the first instruction when detecting that video play duration is greater than preset duration; wherein video play duration is greater than preset duration being the preset condition.

4. The method according to any one of claims 1 to 3, after the first terminal device stops playing the first video in the first interface, further comprising:
locking, by the first terminal device, a screen; or
displaying, by the first terminal device, a preset image corresponding to the first video.

5. The method according to any one of claims 1 to 4, wherein the sending, by the first terminal device, first information to a second terminal device comprises:
establishing, by the first terminal device, a network connection to the second terminal device; and
sending, by the first terminal device, the first information to the second terminal device through the network connection.

6. The method according to claim 5, wherein the establishing, by the first terminal device, a network connection to the second terminal device comprises:
obtaining, by the first terminal device, address information of the second terminal device from configuration information, and establishing the network connection to the second terminal device based on the address information of the second terminal device, wherein the configuration information is preconfigured on the first terminal device; or
searching, by the first terminal device, a network in which the first terminal device is located for an audio device, to obtain address information of the second terminal device, and establishing the network connection to the second terminal device based on the address information of the second terminal device, wherein the audio device is a device with an audio playing function.

7. The method according to any one of claims 1 to 4, wherein the sending, by the first terminal device, first information to a second terminal device comprises:
establishing, by the first terminal device, a Bluetooth connection to the second terminal device; and
sending, by the first terminal device, the first information to the second terminal device through the Bluetooth connection.

8. A terminal device, comprising a processor, a display, a transmitter, and a memory, wherein the processor executes program instructions in the memory;
the display is configured to present a first interface, wherein the first interface comprises a play interface for a first video;
the processor is configured to respond to a first instruction to stop playing the first video in the first interface, wherein the terminal device is configured to obtain the first instruction by using at least one of the following three implementations:
a. the terminal device receives the first instruction entered by a user into the terminal device,
b. the terminal device detects whether a preset condition is met, and generates the first instruction when the terminal device detects that the preset condition is met, and
c. the terminal device receives a control instruction that is sent by a control device and that is used to instruct to pause playing of a video, and generates the first instruction based on the control instruction; and
the transmitter is configured to send first information to a second terminal device, wherein
the first information is first audio data and used to enable the second terminal device to play the first audio data, the first audio data is audio data of the first video after a first play moment, and the first play moment is a play moment at which the first terminal device stops playing the first video.

9. The terminal device according to claim 8, wherein before the processor responds to the first instruction, the processor is further configured to:
generate the first instruction when detecting that video play duration is greater than preset duration; wherein video play duration is greater than preset duration being the preset condition.

10. The terminal device according to claim 8 or 9, wherein
the processor is further configured to lock a screen after the processor stops playing the first video in the first interface; or
the display is further configured to display a preset image corresponding to the first video after the processor stops playing the first video in the first interface.

11. The terminal device according to any one of claims 8 to 10, wherein
the processor is further configured to establish a network connection to the second terminal device; and
the transmitter is specifically configured to send the first information to the second terminal device through the network connection.

12. The terminal device according to claim 11, wherein the processor is specifically configured to:
obtain address information of the second terminal device from configuration information, and establish the network connection to the second terminal device based on the address information of the second terminal device, wherein the configuration information is preconfigured on the first terminal device; or
search a network in which the first terminal device is located for an audio device, to obtain address information of the second terminal device, and establish the network connection to the second terminal device based on the address information of the second terminal device, wherein the audio device is a device with an audio playing function.

13. The terminal device according to any one of claims 8 to 12, wherein
the processor is further configured to establish a Bluetooth connection to the second terminal device; and
the transmitter is specifically configured to send the first information to the second terminal device through the Bluetooth connection.

## Patentansprüche

1. Audio- und Videoabspielverfahren, umfassend:
Präsentieren einer ersten Schnittstelle durch eine erste Endgerätevorrichtung, wobei die erste Schnittstelle eine Abspielschnittstelle für ein erstes Video umfasst; und
Reagieren auf eine erste Anweisung durch die erste Endgerätevorrichtung, ein Abspielen des ersten Videos in der ersten Schnittstelle zu beenden und erste Informationen an eine zweite Endgerätevorrichtung zu senden, wobei
die erste Endgerätevorrichtung die erste Anweisung mithilfe von mindestens einer der folgenden drei Implementierungen erhält:
a. die erste Endgerätevorrichtung empfängt die von einem Benutzer in die erste Endgerätevorrichtung eingegebene erste Anweisung,
b. die erste Endgerätevorrichtung erkennt, ob eine voreingestellte Bedingung erfüllt ist, und erzeugt die erste Anweisung, wenn die erste Endgerätevorrichtung erkennt, dass die voreingestellte Bedingung erfüllt ist, und
c. die erste Endgerätevorrichtung empfängt eine Steueranweisung, die durch eine Steuervorrichtung gesendet wird und die dazu verwendet wird, anzuweisen, das Abspielen eines Videos zu pausieren, und erzeugt die erste Anweisung basierend auf der Steueranweisung,
die ersten Informationen erste Audiodaten sind und verwendet werden, um der zweiten Endgerätevorrichtung zu ermöglichen, die ersten Audiodaten abzuspielen, wobei die ersten Audiodaten Audiodaten des ersten Videos nach einem ersten Abspielzeitpunkt sind und der erste Abspielzeitpunkt ein Abspielzeitpunkt ist,
zu dem die erste Endgerätevorrichtung das Abspielen des ersten Videos beendet.

2. Verfahren nach Anspruch 1, wobei das Reagieren auf eine erste Anweisung durch die erste Endgerätevorrichtung, das Abspielen des ersten Videos in der ersten Schnittstelle zu beenden und erste Informationen an eine zweite Endgerätevorrichtung zu senden, Folgendes umfasst:
wenn die erste Endgerätevorrichtung bestimmt, dass eine voreingestellte Funktion in einem aktivierten Zustand ist, Reagieren auf die erste Anweisung durch die erste Endgerätevorrichtung, das Abspielen des ersten Videos in der ersten Schnittstelle zu beenden und die ersten Informationen an die zweite Endgerätevorrichtung zu senden, wobei die voreingestellte Funktion dazu verwendet wird, anzuzeigen, ein Audio eines Videos über eine andere Vorrichtung abzuspielen, wenn das Abspielen des Videos pausiert ist.

3. Verfahren nach Anspruch 1 oder 2, vor dem Reagieren auf eine erste Anweisung durch die erste Endgerätevorrichtung ferner umfassend:
Erzeugen der ersten Anweisung durch die erste Endgerätevorrichtung, wenn erkannt wird, dass eine Videoabspieldauer länger ist als eine voreingestellte Dauer;
wobei es die voreingestellte Bedingung ist, dass die Videoabspieldauer länger ist als die voreingestellte Dauer.

4. Verfahren nach einem der Ansprüche 1 bis 3, ferner umfassend, nachdem die erste Endgerätevorrichtung das Abspielen des ersten Videos in der ersten Schnittstelle beendet:
Sperren eines Bildschirms durch die erste Endgerätevorrichtung; oder
Anzeigen eines voreingestellten Bildes, das dem ersten Video entspricht, durch die erste Endgerätevorrichtung.

5. Verfahren nach einem der Ansprüche 1 bis 4, wobei das Senden von ersten Informationen an eine zweite Endgerätevorrichtung durch die erste Endgerätevorrichtung Folgendes umfasst:
Herstellen einer Netzwerkverbindung zu der zweiten Endgerätevorrichtung durch die erste Endgerätevorrichtung; und
Senden der ersten Informationen an die zweite Endgerätevorrichtung über die Netzwerkverbindung durch die erste Endgerätevorrichtung.

6. Verfahren nach Anspruch 5, wobei das Herstellen einer Netzwerkverbindung zu der zweiten Endgerätevorrichtung durch die erste Endgerätevorrichtung Folgendes umfasst:
Erhalten von Adressinformationen der zweiten Endgerätevorrichtung durch die erste Endgerätevorrichtung aus Konfigurationsinformationen und Herstellen der Netzwerkverbindung zu der zweiten Endgerätevorrichtung basierend auf den Adressinformationen der zweiten Endgerätevorrichtung, wobei die Konfigurationsinformationen auf der ersten Endgerätevorrichtung vorkonfiguriert sind; oder
Durchsuchen eines Netzwerks, in dem sich die erste Endgerätevorrichtung befindet, nach einer Audiovorrichtung durch die erste Endgerätevorrichtung, um Adressinformationen der zweiten Endgerätevorrichtung zu erhalten, und Herstellen der Netzwerkverbindung zu der zweiten Endgerätevorrichtung basierend auf den Adressinformationen der zweiten Endgerätevorrichtung, wobei die Audiovorrichtung eine Vorrichtung mit einer Audioabspielfunktion ist.

7. Verfahren nach einem der Ansprüche 1 bis 4, wobei das Senden von ersten Informationen an eine zweite Endgerätevorrichtung durch die erste Endgerätevorrichtung Folgendes umfasst:
Herstellen einer Bluetooth-Verbindung zu der zweiten Endgerätevorrichtung durch die erste Endgerätevorrichtung; und
Senden der ersten Informationen an die zweite Endgerätevorrichtung über die Bluetooth-Verbindung durch die erste Endgerätevorrichtung.

8. Endgerätevorrichtung, umfassend einen Prozessor, eine Anzeige, einen Transmitter und einen Speicher, wobei der Prozessor Programmanweisungen in dem Speicher ausführt;
die Anzeige dazu konfiguriert ist, eine erste Schnittstelle zu präsentieren, wobei die erste Schnittstelle eine Abspielschnittstelle für ein erstes Video umfasst;
der Prozessor dazu konfiguriert ist, auf eine erste Anweisung zu reagieren, das Abspielen des ersten Videos in der ersten Schnittstelle zu beenden, wobei die Endgerätevorrichtung dazu konfiguriert ist, die erste Anweisung mithilfe von mindestens einer der folgenden drei Implementierungen zu erhalten:
a. die Endgerätevorrichtung empfängt die von einem Benutzer in die Endgerätevorrichtung eingegebene erste Anweisung,
b. die Endgerätevorrichtung erkennt, ob eine voreingestellte Bedingung erfüllt ist, und erzeugt die erste Anweisung, wenn die Endgerätevorrichtung erkennt, dass die voreingestellte Bedingung erfüllt ist, und
c. die Endgerätevorrichtung empfängt eine Steueranweisung, die durch eine Steuervorrichtung gesendet wird und die dazu verwendet wird, anzuweisen, das Abspielen eines Videos zu pausieren, und erzeugt die erste Anweisung basierend auf der Steueranweisung; und
der Transmitter dazu konfiguriert ist, erste Informationen an eine zweite Endgerätevorrichtung zu senden, wobei die ersten Informationen erste Audiodaten sind und verwendet werden, um der zweiten Endgerätevorrichtung zu ermöglichen, die ersten Audiodaten abzuspielen, wobei die ersten Audiodaten Audiodaten des ersten Videos nach einem ersten Abspielzeitpunkt sind und der erste Abspielzeitpunkt ein Abspielzeitpunkt ist, zu dem die erste Endgerätevorrichtung das Abspielen des ersten Videos beendet.

9. Endgerätevorrichtung nach Anspruch 8, wobei der Prozessor, bevor der Prozessor auf die erste Anweisung reagiert, ferner zu Folgendem konfiguriert ist:
Erzeugen der ersten Anweisung, wenn erkannt wird, dass eine Videoabspieldauer länger ist als eine voreingestellte Dauer;
wobei es die voreingestellte Bedingung ist, dass die Videoabspieldauer länger ist als die voreingestellte Dauer.

10. Endgerätevorrichtung nach Anspruch 8 oder 9, wobei
der Prozessor ferner dazu konfiguriert ist, einen Bildschirm zu sperren, nachdem der Prozessor das Abspielen des ersten Videos in der ersten Schnittstelle beendet; oder
die Anzeige ferner dazu konfiguriert ist, ein voreingestelltes Bild anzuzeigen, das dem ersten Video entspricht, nachdem der Prozessor das Abspielen des ersten Videos in der ersten Schnittstelle beendet.

11. Endgerätevorrichtung nach einem der Ansprüche 8 bis 10, wobei
der Prozessor ferner dazu konfiguriert ist, eine Netzwerkverbindung zu der zweiten Endgerätevorrichtung herzustellen; und
der Transmitter spezifisch dazu konfiguriert ist, die ersten Informationen über die Netzwerkverbindung an die zweite Endgerätevorrichtung zu senden.

12. Endgerätevorrichtung nach Anspruch 11, wobei der Prozessor spezifisch zu Folgendem konfiguriert ist:
Erhalten von Adressinformationen der zweiten Endgerätevorrichtung aus Konfigurationsinformationen und
Herstellen der Netzwerkverbindung zu der zweiten Endgerätevorrichtung basierend auf den Adressinformationen der zweiten Endgerätevorrichtung, wobei die Konfigurationsinformationen auf der ersten Endgerätevorrichtung vorkonfiguriert sind; oder
Durchsuchen eines Netzwerks, in dem sich die erste Endgerätevorrichtung befindet, nach einer Audiovorrichtung, um Adressinformationen der zweiten Endgerätevorrichtung zu erhalten, und Herstellen der Netzwerkverbindung zu der zweiten Endgerätevorrichtung basierend auf den Adressinformationen der zweiten Endgerätevorrichtung, wobei die Audiovorrichtung eine Vorrichtung mit einer Audioabspielfunktion ist.

13. Endgerätevorrichtung nach einem der Ansprüche 8 bis 12, wobei
der Prozessor ferner dazu konfiguriert ist, eine Bluetooth-Verbindung zu der zweiten Endgerätevorrichtung herzustellen; und der Transmitter spezifisch dazu konfiguriert ist, die ersten Informationen über die Bluetooth-Verbindung an die zweite Endgerätevorrichtung zu senden.

## Revendications

1. Procédé de lecture audio et vidéo, comprenant :
la présentation, par un premier dispositif terminal, d'une première interface, dans lequel la première interface comprend une interface de lecture pour une première vidéo ; et
le fait de répondre, par le premier dispositif terminal, à une première instruction pour arrêter la lecture de la première vidéo dans la première interface et pour envoyer de premières informations à un second dispositif terminal, dans lequel
le premier dispositif terminal obtient la première instruction à l'aide d'au moins l'une des trois mises en œuvre suivantes :
a. le premier dispositif terminal reçoit la première instruction entrée par un utilisateur dans le premier dispositif terminal,
b. le premier dispositif terminal détecte si une condition prédéfinie est satisfaite, et génère la première instruction lorsque le premier dispositif terminal détecte que la condition prédéfinie est satisfaite, et
c. le premier dispositif terminal reçoit une instruction de commande qui est envoyée par un dispositif de commande et qui est utilisée pour demander de mettre en pause la lecture d'une vidéo, et génère la première instruction sur la base de l'instruction de commande,
les premières informations sont des premières données audio et sont utilisées pour permettre au second dispositif terminal de lire les premières données audio, les premières données audio sont les données audio de la première vidéo après un premier instant de lecture, et le premier instant de lecture est un instant de lecture pendant lequel le premier dispositif terminal arrête de lire la première vidéo.

2. Procédé selon la revendication 1, dans lequel le fait de répondre, par le premier dispositif terminal, à une première instruction pour arrêter la lecture de la première vidéo dans la première interface et pour envoyer de premières informations à un second dispositif terminal comprend :
lorsque le premier dispositif terminal détermine qu'une fonction prédéfinie est dans un état activé, le fait de répondre, par le premier dispositif terminal, à la première instruction pour arrêter la lecture de la première vidéo dans la première interface et pour envoyer les premières informations au second dispositif terminal, dans lequel la fonction prédéfinie est utilisée pour indiquer de lire l'audio d'une vidéo par le biais d'un autre dispositif lorsque la lecture de la vidéo est mise en pause.

3. Procédé selon la revendication 1 ou 2, avant le fait de répondre, par le premier dispositif terminal, à une première instruction, comprenant également :
la génération, par le premier dispositif terminal, de la première instruction lors de la détection que la durée de lecture vidéo est supérieure à une durée prédéfinie ; dans lequel le fait que la durée de lecture vidéo est supérieure à une durée prédéfinie est la condition prédéfinie.

4. Procédé selon l'une quelconque des revendications 1 à 3, après que le premier dispositif terminal a arrêté de lire la première vidéo dans la première interface, comprenant également :
le verrouillage, par le premier dispositif terminal, d'un écran ; ou
l'affichage, par le premier dispositif terminal, d'une image prédéfinie correspondant à la première vidéo.

5. Procédé selon l'une quelconque des revendications 1 à 4, dans lequel l'envoi, par le premier dispositif terminal, de premières informations à un second dispositif terminal comprend :
l'établissement, par le premier dispositif terminal, d'une connexion réseau avec le second dispositif terminal ; et
l'envoi, par le premier dispositif terminal, des premières informations au second dispositif terminal par l'intermédiaire de la connexion réseau.

6. Procédé selon la revendication 5, dans lequel l'établissement, par le premier dispositif terminal, d'une connexion réseau avec le second dispositif terminal comprend : l'obtention, par le premier dispositif terminal, d'informations d'adresse du second dispositif terminal à partir d'informations de configuration, et l'établissement de la connexion réseau avec le second dispositif terminal sur la base des informations d'adresse du second dispositif terminal, dans lequel les informations de configuration sont préconfigurées sur le premier dispositif terminal ; ou
la recherche, par le premier dispositif terminal, d'un dispositif audio sur un réseau dans lequel se trouve le premier dispositif terminal, pour obtenir les informations d'adresse du second dispositif terminal, et l'établissement de la connexion réseau avec le second dispositif terminal sur la base des informations d'adresse du second dispositif terminal, dans lequel le dispositif audio est un dispositif avec une fonction de lecture audio.

7. Procédé selon l'une quelconque des revendications 1 à 4, dans lequel l'envoi, par le premier dispositif terminal, de premières informations à un second dispositif terminal comprend :
l'établissement, par le premier dispositif terminal, d'une connexion Bluetooth avec le second dispositif terminal ; et
l'envoi, par le premier dispositif terminal, des premières informations au second dispositif terminal par l'intermédiaire de la connexion Bluetooth.

8. Dispositif terminal, comprenant un processeur, un affichage, un émetteur et une mémoire, dans lequel le processeur exécute les instructions de programme dans la mémoire ;
l'affichage est configuré pour présenter une première interface, dans lequel la première interface comprend une interface de lecture pour une première vidéo ;
le processeur est configuré pour répondre à une première instruction pour arrêter la lecture de la première vidéo dans la première interface, dans lequel le dispositif terminal est configuré pour obtenir la première instruction à l'aide d'au moins l'une des trois mises en œuvre suivantes :
a. le dispositif terminal reçoit la première instruction entrée par un utilisateur dans le dispositif terminal,
b. le dispositif terminal détecte si une condition prédéfinie est satisfaite, et génère la première instruction lorsque le dispositif terminal détecte que la condition prédéfinie est satisfaite, et
c. le dispositif terminal reçoit une instruction de commande qui est envoyée par un dispositif de commande et qui est utilisée pour demander de mettre en pause la lecture d'une vidéo, et génère la première instruction sur la base de l'instruction de commande ; et
l'émetteur est configuré pour envoyer de premières informations à un second dispositif terminal, dans lequel
les premières informations sont des premières données audio et sont utilisées pour permettre au second dispositif terminal de lire les premières données audio, les premières données audio sont les données audio de la première vidéo après un premier instant de lecture, et le premier instant de lecture est un instant de lecture pendant lequel le premier dispositif terminal arrête de lire la première vidéo.

9. Dispositif terminal selon la revendication 8, dans lequel avant que le processeur ne réponde à la première instruction, le processeur est également configuré pour :
générer la première instruction lors de la détection que la durée de lecture vidéo est supérieure à une durée prédéfinie ; dans lequel le fait que la durée de lecture vidéo est supérieure à une durée prédéfinie est la condition prédéfinie.

10. Dispositif terminal selon la revendication 8 ou 9, dans lequel
le processeur est également configuré pour verrouiller un écran après que le processeur a arrêté de lire la première vidéo dans la première interface ; ou
l'affichage est également configuré pour afficher une image prédéfinie correspondant à la première vidéo après que le processeur a arrêté de lire la première vidéo dans la première interface.

11. Dispositif terminal selon l'une quelconque des revendications 8 à 10, dans lequel
le processeur est également configuré pour établir une connexion réseau avec le second dispositif terminal ; et
l'émetteur est spécifiquement configuré pour envoyer les premières informations au second dispositif terminal par l'intermédiaire de la connexion réseau.

12. Dispositif terminal selon la revendication 11, dans lequel le processeur est spécifiquement configuré pour :
obtenir les informations d'adresse du second dispositif terminal à partir d'informations de configuration, et établir la connexion réseau avec le second dispositif terminal sur la base des informations d'adresse du second dispositif terminal, dans lequel les informations de configuration sont préconfigurées sur le premier dispositif terminal ; ou
rechercher un dispositif audio sur un réseau dans lequel se trouve le premier dispositif terminal, pour obtenir les informations d'adresse du second dispositif terminal, et établir la connexion réseau avec le second dispositif terminal sur la base des informations d'adresse du second dispositif terminal, dans lequel le dispositif audio est un dispositif avec une fonction de lecture audio.

13. Dispositif terminal selon l'une quelconque des revendications 8 à 12, dans lequel
le processeur est également configuré pour établir une connexion Bluetooth avec le second dispositif terminal ; et
l'émetteur est spécifiquement configuré pour envoyer les premières informations au second dispositif terminal par l'intermédiaire de la connexion Bluetooth.
